# FASCICULE DE BREVET EUROPEEN

(11) **EP 1 039 822 B1**
(45) Date de publication et mention de la délivrance du brevet: **03.03.2004**
(21) Numéro de dépôt: 99936729.5
(22) Date de dépôt: 12.08.1999
(51) Int. Cl.: A47J 27/08

(54) **APPAREIL DE CUISSON SOUS PRESSION A FERMETURE A BAIONNETTES**
DRUCKKOCHGERÄT MIT BAJONETT-VERSCHLUSS
PRESSURE COOKER WITH BAYONET CLOSURE

(30) Priorité: 13.08.1998 FR 9810482
(43) Date de publication de la demande: 04.10.2000
(73) Titulaire: Seb S.A., 69132 Ecully Cedex (FR)
(72) Inventeur: ANOTA, Daniel, Jean-Marie, F-21800 Chevigny Saint-Sauveur (FR); PIGUET, Yvan, Marcel, Georges, F-52190 Cusey (FR)
(74) Mandataire: Martin, Didier
(86) Numéro de dépôt international: PCT/FR1999/001979
(87) Numéro de publication internationale: WO 2000/008983

(56) Documents cités:
- DE-U- 8 905 111
- FR-A- 624 155
- US-A- 2 395 602

## Description

### DOMAINE TECHNIQUE

La présente invention se rapporte au domaine technique général des appareils de cuisson sous pression, à usage domestique tel que des autocuiseurs, comportant une cuve sur laquelle est rapportée un couvercle destiné à être fermé de manière hermétique sur la cuve par l'intermédiaire d'un système de fermeture à baïonnettes.

La présente invention concerne un appareil de cuisson sous pression comportant une cuve destinée à être fermée par un couvercle au moyen d'un système de fermeture à baïonnettes avec des rampes de cuve d'épaisseur " *ep* " et de largeur " *L* " et des rampes de couvercle, les dites rampes de cuve s'étendant radialement et en oblique, vers l'extérieur et vers le bas de l'appareil.

### TECHNIQUE ANTERIEURE

Il est déjà connu de réaliser des appareils de cuisson sous pression à usage domestique, du genre autocuiseur, par emboutissage de pièces métalliques. Parmi les différents concepts d'autocuiseurs connus actuellement, on distingue parmi ceux-ci, les autocuiseurs à étrier, les autocuiseurs à trou d'homme, les autocuiseurs à segments et enfin les autocuiseurs à baïonnettes.

Les autocuiseurs à étrier comportent une cuve pourvue d'oreillons destinés à servir de points de fixation pour un étrier solidaire du couvercle. Les autocuiseurs réalisés selon ce type de concept sont considérés comme procurant une bonne résistance générale. En particulier, ils donnent de bons résultats, en termes de résistance hydraulique ou en termes de résistance à la destruction par pression de vapeur, lors d'essais de sécurité. En effet, il s'avère, en cas de surpression, que l'une des pièces principales, l'étrier ou le couvercle, se déforme de façon élastique permettant ainsi de libérer la pression, par création d'une pression de fuite. Les autocuiseurs réalisés selon ce concept sont donc généralement considérés comme étant aptes à fournir un bon niveau de sécurité à l'utilisation.

Les autocuiseurs réalisés selon le concept du trou d'homme mettent en oeuvre un couvercle dont la forme conjuguée à celle de la cuve nécessite l'introduction préalable du couvercle à l'intérieur de la cuve pour assurer ensuite, par remontée du couvercle dans la cuve, l'atteinte d'une position de fermeture et de blocage. Les autocuiseurs réalisés selon ce concept sont généralement connus comme n'étant pas susceptibles de fournir un niveau de sécurité comparable aux autocuiseurs à étrier. En effet, compte tenu notamment des relations de formes nécessaires entre la cuve et le couvercle pour assurer à la fois la fermeture et l'ouverture de l'autocuiseur, le niveau de sécurité général de tels appareils n'est pas globalement satisfaisant.

Les autocuiseurs à segments permettent d'assurer une bonne sécurité générale de l'utilisateur et donne de bons résultats lors des essais simulés de surpression. En effet, il apparaît qu'au moins le couvercle se déforme de façon élastique permettant à la pression de s'échapper et évitant ainsi une destruction de l'appareil. Les autocuiseurs réalisés selon ce concept peuvent néanmoins souffrir d'un coût de fabrication élevé, susceptible de limiter leur diffusion à grande échelle.

Enfin, il est connu de réaliser des autocuiseurs dits " *à baïonnettes* " qui mettent en oeuvre une série de rampes de cuve et de couvercle réparties angulairement sur la cuve et le couvercle. Lors de la fermeture du couvercle sur la cuve, la coopération entre les rampes de cuve et de couvercle assure la fermeture et le blocage en position relative des deux pièces, un joint annulaire assurant l'étanchéité de l'autocuiseur et permettant la montée en pression. Une telle conception est largement répandue et très utilisée dans le monde entier, en raison essentiellement de la facilité de fabrication de tels appareils. Il est en effet possible de réaliser et d'industrialiser relativement facilement l'emboutissage des pièces puis, le formage et le découpage des rampes de cuve et de couvercle. La réalisation de ces pièces peu compliquées permet au total d'obtenir un produit de coût relativement faible, du moins en comparaison avec les autres types d'autocuiseurs mentionnés précédemment.

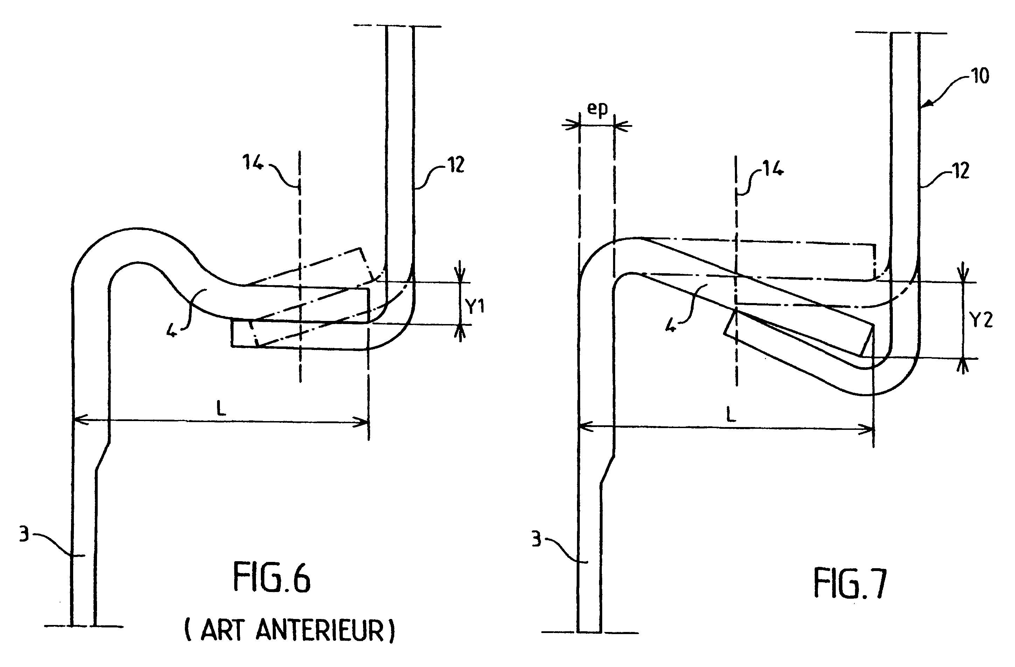

Il s'avère néanmoins que les autocuiseurs réalisés selon le principe du concept à baïonnettes n'assurent pas, du moins dans leur conception intrinsèque théorique, une sécurité parfaite. En effet, en plus bien évidemment des dispositifs classiques et annexes de sécurité mettant en oeuvre une ou plusieurs valves de sécurité, la sécurité est assurée dans de tels autocuiseurs par le joint d'étanchéité lui-même. En cas de surpression, le joint se déforme radialement et permet, en association avec un profil du joint approprié et éventuellement une zone de fuite appropriée dans le couvercle, une fuite plus ou moins violente de pression. Néanmoins, il s'avère qu'en raison du vieillissement du matériau élastomère constitutif du joint, le maintien du niveau de sécurité optimal et initial de l'autocuiseur n'est pas parfaitement maîtrisé dans le temps, la valeur de déclenchement de la fuite pouvant varier. En outre, les autocuiseurs à baïonnettes connus à ce jour possèdent des profils de rampes de cuve et de couvercle spécialement conçus pour assurer une résistance maximale à la déformation en cas de surpression. Ainsi, le profil des rampes de cuve présente généralement une forme dite en " *col de cygne* " (figure 6) permettant précisément d'assurer une résistance et une rigidité maximales des rampes de cuve en cas d'apparition de phénomène de surpression critique. La conséquence d'un tel choix de profil de rampe est de créer, au-delà de la valeur de résistance limite des rampes sur le plan mécanique, un échappement brutal du couvercle par déformation violente des rampes.

### EXPOSE DE L'INVENTION

L'objet de l'invention vise en conséquence à proposer un nouvel appareil de cuisson sous pression à fermeture à baïonnettes portant remède aux différents inconvénients énumérés précédemment et qui soit de conception économique et simple tout en permettant d'améliorer la sécurité en cas de surpression.

Un autre objet de l'invention vise à proposer un nouvel appareil de cuisson dont le système de fermeture à baïonnettes représente un bon compromis technique, en cas de surpression, entre une déformation progressive des rampes et une rigidité de réaction.

Un autre objet de l'invention est de proposer un nouvel appareil de cuisson qui puisse être réalisé de manière particulièrement économique.

Un autre objet de l'invention est de proposer un nouvel appareil de cuisson d'aspect esthétique amélioré.

Un autre objet de l'invention est de fournir un nouvel appareil de cuisson dont le nettoyage est facilité.

Les objets assignés à l'invention sont atteints à l'aide d'un appareil de cuisson sous pression comportant une cuve destinée à être fermée par un couvercle au moyen d'un système de fermeture à baïonnettes avec des rampes de cuve d'épaisseur " *ep* " et de largeur " *L* " et des rampes de couvercle, les dites rampes de cuve s'étendant radialement et en oblique, vers l'extérieur de l'appareil caractérisé en ce que : le rapport " *L*/*ep* " est compris entre 2,5 et 13, et de préférence entre 8 et 13 pour des rampes de cuve en acier inoxydable.

### DESCRIPTIF SOMMAIRE DES DESSINS

Les objets assignés à l'invention seront explicités plus en détail à la lecture de la description qui suit à l'aide des dessins annexés ci-après, donnés à titre purement illustratif et non limitatif, dans lesquels :
- la figure 1 montre, selon une vue de coté, une vue partiellement arrachée d'un appareil de cuisson conforme à l'invention.
- la figure 2 illustre, selon une vue partielle en coupe, un détail de réalisation des rampes de cuve et de couvercle d'un appareil de cuisson conforme à l'invention.
- la figure 3 illustre, selon une vue de dessus, la disposition des rampes de cuve d'un appareil conforme à l'invention.
- la figure 4 illustre, selon une vue de dessus, la position relative du couvercle et de la cuve d'un appareil de cuisson conforme à l'invention avant fermeture.
- la figure 5 illustre, selon une vue partielle en coupe transversale, un détail de réalisation des rampes de cuve conforme à l'invention.
- la figure 6 illustre, selon une vue partielle en coupe transversale, un détail de réalisation des rampes de cuve de l'art antérieur en " *col de cygne* ".
- la figure 7 illustre, selon une vue partielle en coupe transversale, un détail de réalisation des rampes de cuve conforme à l'invention montrant l'augmentation de la valeur de la déformée Y2 par rapport à l'art antérieur illustré à la figure 6.

### MEILLEURE MANIERE DE REALISER L'INVENTION

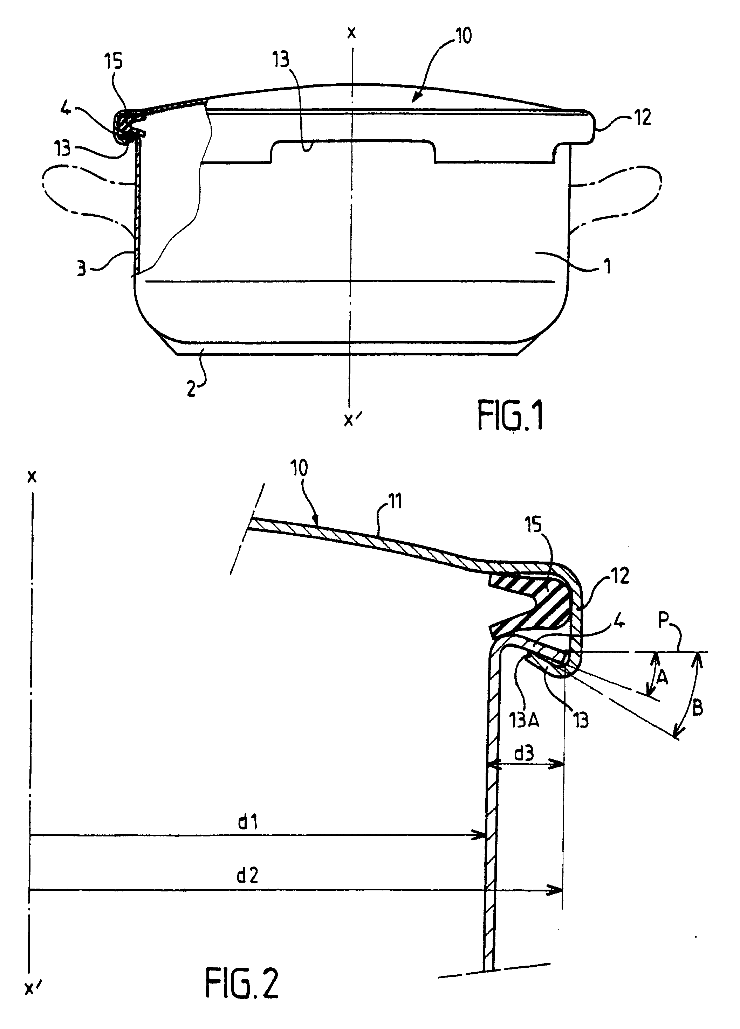

L'appareil de cuisson sous pression illustré aux figures 1 à 4 est un autocuiseur à usage domestique comportant une cuve 1, sensiblement circulaire, et réalisé à partir de matériau métallique, par exemple en acier inoxydable, ou en aluminium.

La cuve 1 comporte un fond 2, rapporté par exemple par frappe à chaud sur la partie inférieure de la cuve 1. Cette dernière est réalisée par exemple par emboutissage d'une tôle métallique de manière à réaliser une paroi 3 latérale et de préférence circulaire, d'épaisseur sensiblement constante.

Au cours de l'opération d'emboutissage, le bord supérieur de la cuve 1 est plié vers l'extérieur, en considération de l'axe de symétrie x-x' de l'appareil correspondant au centre de la cuve 1 pour permettre, après une opération appropriée de découpe, la réalisation de rampes de cuve 4. Si une étape d'étirage a lieu, l'épaisseur " *ep* " des rampes de cuve 4 sera de l'ordre de 1,3 à 1,6 mm pour de l'acier inoxydable, et de l'ordre de 3,5 à 4,5 mm pour de l'aluminium, l'épaisseur des parois 3 étant légèrement inférieure, et par exemple de l'ordre de 0,9 mm pour l'acier inoxydable.

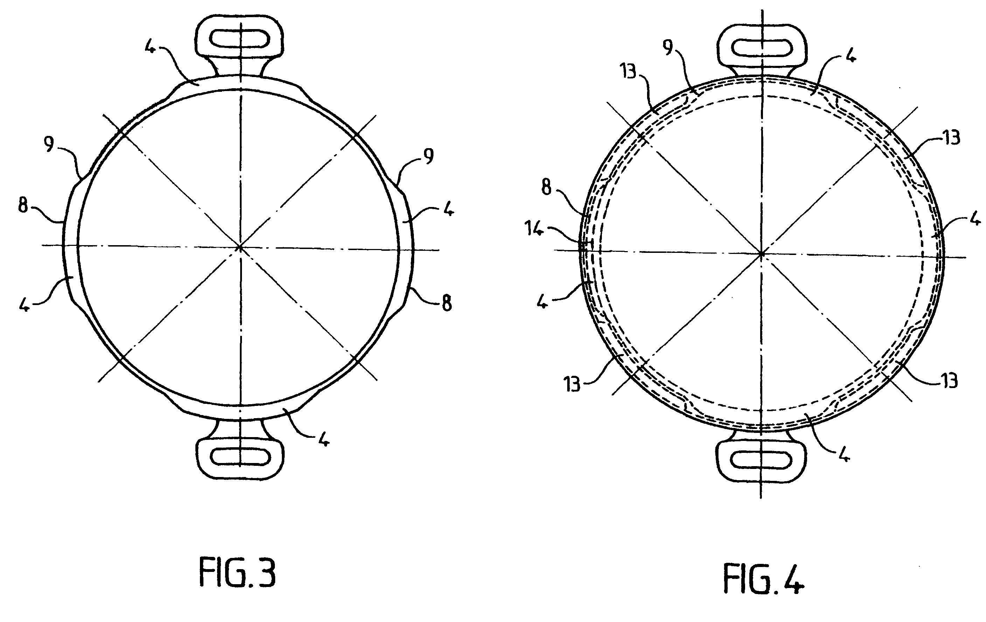

Selon l'invention, les rampes de cuve 4 sont repliées de manière à s'étendre radialement et en oblique, en considération du centre de la cuve 1 et de l'axe x-x', vers l'extérieur et vers le bas de l'appareil. Les rampes de cuve 4 sont réparties de manière régulière ou non à la périphérie de la cuve 1. Selon une variante préférentielle de l'invention, telle qu'illustrée à la figure 3 par exemple, la cuve 1 comporte quatre rampes de cuve 4 réparties angulairement de manière régulière et espacée chacune de 90°.

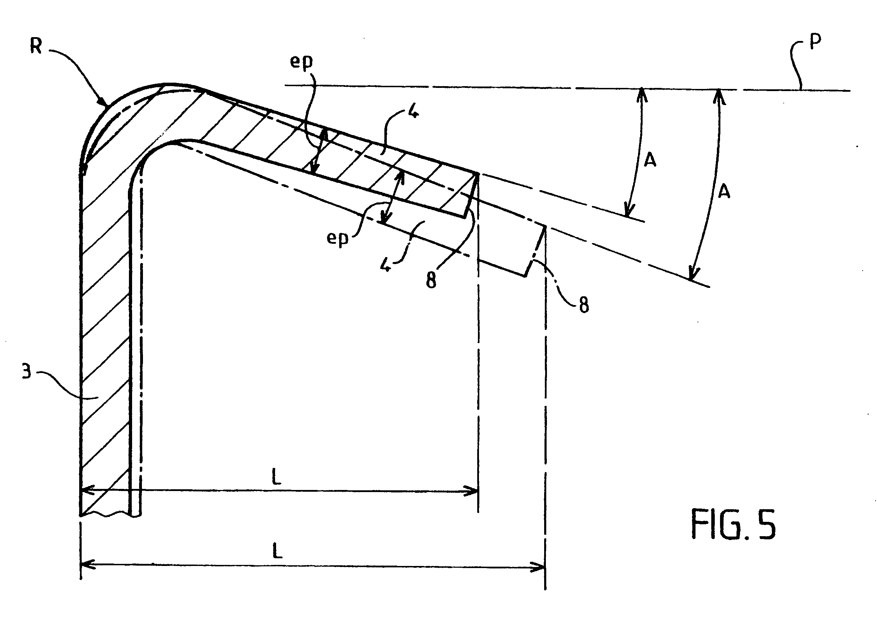

Selon l'invention, la largeur " *L* " des rampes de cuve 4, correspondant à la distance (figures 5 et 7 en particulier) entre la face interne de la cuve 1 et l'extrémité du bord périphérique 8 marquant la limite extrême de l'extension radiale des rampes de cuve 4, sera de l'ordre de 13 à 16 mm. La largeur " *L* " des rampes de cuve 4 sera sensiblement constante, quel que soit le matériau métallique utilisé (acier inoxydable ou aluminium par exemple), seule l'épaisseur " *ep* " des rampes de cuve 4 étant susceptibles de varier selon le matériau utilisé pour tenir compte de la faculté de résistance et de déformation élastique du matériau métallique.

Selon l'invention, l'appareil de cuisson sous pression comporte également un couvercle 10 de diamètre adapté au diamètre de la cuve 1 de manière à former en position de fermeture et avec un système de fermeture à baïonnettes un appareil de cuisson étanche. Le couvercle 10 est également, de manière avantageuse, obtenu par emboutissage et comporte à partir de sa face supérieure 11 un bord tombé périphérique 12 dont le bord inférieur est plié localement, de préférence à intervalle régulier, pour former une série de rampes de couvercle 13.

Avantageusement, et de la même manière que pour les rampes de cuve 4, les rampes de couvercle 13 s'étendent radialement et en oblique, mais selon une direction opposée, à savoir vers l'intérieur de l'appareil et de préférence vers le haut en considération du centre de la cuve. Les rampes de cuve 4 constituent ainsi avec les rampes de couvercle 13 un système de fermeture à baïonnettes, formé de préférence par un ensemble apparié de quatre rampes de cuve 4 et de quatre rampes de couvercle 13.

De manière classique, l'appareil de cuisson conforme à l'invention comporte un joint annulaire 15 à lèvres, interposé, à la périphérie de l'autocuiseur, entre le couvercle 10 et le bord supérieur de la cuve 1 pour réaliser l'étanchéité de l'appareil et permettre la montée en pression.

De manière également connue en tant que tel, le système de fermeture à baïonnettes est conçu et dimensionné de telle façon pour que, en position de fermeture, les rampes de couvercle 13, telles que montrées en particulier à la figure 2, viennent en appui sur la face inférieure des rampes de cuve 4 pour assurer la fermeture et l'étanchéité de l'autocuiseur.

Selon l'invention, les rampes de cuve 4 se terminent par un bord périphérique 8 délimitant la limite extrême de leur extension radiale, ledit bord périphérique 8 étant situé sur un diamètre *d2* relativement au centre de la cuve 1 matérialisé par l'axe x-x' et correspondant au diamètre extérieur de la cuve 1. De la même façon, le diamètre intérieur *d1* de la cuve sera matérialisé par la distance *d1* séparant l'axe x-x' de la face interne des parois 3 (figure 2).

Selon une caractéristique importante de l'invention, les rampes de cuve 4 d'épaisseur " *ep* " et de largeur " *L* " possèderont des valeurs dimensionnelles spécifiques. Ainsi, le rapport " *L*/*ep* " sera compris entre 2,5 et 13, et de préférence entre 8 et 13 pour de l'acier inoxydable (figures 5 et 7). De manière encore plus préférentielle, le rapport " *L*/*ep* " sera compris entre 8 et 10 pour des rampes de cuve 4 en acier inoxydable. Ainsi, le respect d'un ratio de dimension et d'extension relative des rampes de cuve 4 en considération de l'épaisseur de la cuve de chaque autocuiseur permet, en combinaison avec l'obliquité desdites rampes, d'obtenir une flexibilité relative et potentielle des rampes de cuve 4.

En raison des caractéristiques mécaniques différentes de l'aluminium en regard de l'acier inoxydable, et en particulier en raison de la moindre résistance de l'aluminium et de son comportement élastique réduit, les épaisseurs de rampes de cuve 4 réalisées en aluminium seront plus importantes.

L'allongement relatif de la largeur des rampes de cuve 4 induit également une augmentation de l'écart dimensionnel entre le bord de cuve 1 et le bord tombé 12 ce qui permet :
- de mieux dimensionner la largeur des rampes de couvercle 13,
- d'assurer un meilleur recouvrement entre les rampes de cuve 4 et les rampes de couvercle 13, malgré les dispersions éventuelles de fabrication et d'associer, dans les cas extrêmes, une cuve de diamètre minimal avec un couvercle de diamètre maximal,
- de ménager un espace plus important entre le diamètre de l'entre-rampe de la cuve 1 et le bord tombé 12 pour loger d'éventuels dispositifs annexes.

Cet allongement relatif pourra se traduire par une distance *d3*, de l'ordre de 13 à 16 mm par exemple, entre le diamètre intérieur de cuve 1 et le diamètre intérieur du couvercle 10.

La figure 5 montre, pour une cuve en acier inoxydable, deux exemples de réalisation de rampes de cuve 4, l'une en trait plein, d'épaisseur "*ep* " de l'ordre de 1,3 mm, l'autre en trait pointillé, d'épaisseur " *ep* " de l'ordre de 1,6 mm, leur largeur respective " *L* " étant de l'ordre de 13 et 16 mm.

En cas de surpression et de défaillance simultanée des autres dispositifs de sécurité de l'autocuiseur, les rampes de cuve 4 peuvent ainsi se déformer de manière élastique vers le haut de l'appareil et faire ainsi apparaître une *" déformée* " dont la valeur Y2 est amplifiée par rapport aux constructions classiques connues Y1 (figure 6). Ceci permet d'éviter, contrairement aux systèmes classiques connus actuellement (figure 6), une déformation brutale s'accompagnant d'un échappement violent des rampes de couvercle 13 en cas de forte surpression. La comparaison des figures 6 et 7 illustre le comportement différent des rampes de cuve 4 conforme à l'invention en regard des systèmes classiques. Par ailleurs, une telle déformation élastique permet d'obtenir une fuite progressive de pression.

Selon une version avantageuse de l'invention, les rampes de cuve 4 et de couvercle 13 s'étendent en oblique de manière conjuguée, de manière à parfaire la coopération desdites rampes et améliorer la progressivité et l'élasticité de la déformation.

Selon une autre version particulièrement avantageuse de l'invention, les rampes de couvercle 13 s'étendent en oblique selon une valeur angulaire supérieure à la valeur angulaire de l'obliquité des rampes de cuve 4.

Ainsi, la valeur angulaire de l'obliquité des rampes de couvercle 13, exprimée par l'angle B formé par le plan d'extension des rampes de couvercle 13 avec le plan horizontal P (figure 2), est comprise entre 15° et 25°, et de préférence entre 15° et 20°.

Selon ces mêmes caractéristiques, la valeur angulaire de l'obliquité des rampes de cuve 4 (figures 2 et 5), exprimée par l'angle A formé par le plan d'extension moyen des rampes de cuve 4 avec le même plan P, est comprise entre 10° et 20°, et de préférence entre 10° et 15°.

Cette relation angulaire permet de reporter sensiblement vers l'intérieur de l'appareil la ligne d'application 14 (figures 4 et 7) des rampes de couvercle 13, en l'occurence par leur bord terminal 13A sur les rampes de cuve 4. La ligne d'application 14 est ainsi située sensiblement dans une zone correspondant au tiers central de la largeur de chaque rampe de cuve 4. Avantageusement, la ligne d'application 14 sera située vers la moitié de la largeur des rampes de cuve 4. Ces valeurs constituent un compromis acceptable entre d'une part une déformation progressive et/ou une bonne flexibilité des rampes de cuve 4, et d'autre part une bonne rigidité et/ou tenue desdites rampes.

Selon l'invention, l'épaisseur " *ep* " des rampes de cuve 4 sera sensiblement égale à l'épaisseur de la paroi 3 de la cuve 1, aux variations d'épaisseurs près résultant éventuellement de l'opération d'emboutissage et d'étirage, et par exemple de l'ordre de 1,3 à 1,6 mm pour des cuves en inox.

Selon une variante particulièrement avantageuse de l'invention, la section transversale des rampes de cuve 4 et de couvercle 13 sera sensiblement plane, et ce dès la zone de raccordement, d'un rayon *R* de l'ordre de 2,2 à 3 mm par exemple, avec la paroi 3.

Selon une autre variante de réalisation particulièrement avantageuse, les sections transversales des rampes de cuve 4 et de couvercle 13 seront sensiblement coniques ou de forme proche, par exemple paraboliques.

Selon une autre caractéristique secondaire de l'invention, le contour 9 des bords latéraux des rampes de cuve 4 forme un raccordement progressif avec le bord de cuve, ledit raccordement étant réalisé à partir de rayons de raccordement élevés compris entre 22 et 28 mm par exemple. Une telle réalisation, en association ou non avec la section conique des rampes de cuve 4, permet de réaliser un bord particulièrement esthétique et favorisant de plus l'opération de nettoyage de l'ensemble de l'autocuiseur.

L'invention permet en conséquence d'obtenir un appareil de cuisson sous pression, tel qu'un autocuiseur présentant des caractéristiques esthétiques nouvelles associées à des caractéristiques de sécurité améliorées, comparables aux niveaux de sécurité atteints avec d'autres types d'autocuiseurs.

### POSSIBILITE D'APPLICATION INDUSTRIELLE

L'invention trouve son application industrielle dans la fabrication d'appareils domestiques de cuisson sous pression, en particulier d'autocuiseurs à baïonnettes.

## Revendications

1. Appareil de cuisson sous pression comportant une cuve (1) destinée à être fermée par un couvercle (10) au moyen d'un système de fermeture à baïonnettes avec des rampes de cuve (4) d'épaisseur " *ep* " et de largeur " *L* " et des rampes de couvercle (13), **caractérisé en ce que** lesdites rampes de cuve (4) s'étendent radialement et en oblique, vers l'extérieur et vers le bas de l'appareil, le rapport " *L*/*ep* " étant compris entre 2,5 et 13.

2. Appareil selon la revendication 1 **caractérisé en ce que** le rapport " *L*/*ep* " est compris entre 8 et 13 pour des rampes de cuves (4) en acier inoxydable.

3. Appareil selon la revendication 1 ou 2 **caractérisé en ce que** les rampes de couvercle (13) s'étendent radialement et en oblique vers l'intérieur de l'appareil de manière conjuguée avec les rampes de cuve (4).

4. Appareil selon la revendication 3 **caractérisé en ce que** les rampes de couvercle (18) s'étendent en oblique selon une valeur angulaire (B) supérieure à la valeur angulairel (A) de l'obliquité des rampes de cuve (4).

5. Appareil selon la revendication 4 **caractérisé en ce que** la valeur angulaire (B) de l'obliquité des rampes de couvercle (13) est comprise entre 15° et 25°, et de préférence entre 15° et 20°, la valeur angulaire (A) de l'obliquité des rampes de cuve (4) étant comprise entre 10° et 20°, et de préférence entre 10° et 15°.

6. Appareil selon la revendication 4 ou la revendication 5 **caractérisé en ce que** la ligne d'application (14) des rampes de couvercle (13) sur les rampes de cuve (4) est située sensiblement dans une zone correspondant au tiers central de la largeur de chaque rampe de cuve (4), de préférence vers sa moitié.

7. Appareil selon l'une des revendications 1 à 6 **caractérisé en ce que** l'épaisseur des rampes de cuve (4) est sensiblement égale à l'épaisseur de la paroi de cuve (3).

8. Appareil selon l'une des revendications 1 à 7 **caractérisé en ce que** les sections des rampes de cuve (4) et de couvercle (13) sont sensiblement planes.

9. Appareil selon l'une des revendications 1 à 7 **caractérisé en ce que** les sections des rampes de cuve (4) et de couvercle (13) sont sensiblement coniques ou paraboliques.

10. Appareil selon l'une des revendications 1 à 9 **caractérisé en ce qu'**il comporte un ensemble apparié de quatre rampes de cuve (4) et de quatre rampes de couvercle (13).

11. Appareil selon l'une des revendications 1 à 10 **caractérisé en ce que** le contour des bords latéraux (9) des rampes de cuve (4) forme un raccordement progressif avec le bord de cuve, réalisé à partir de rayons de raccordement élevés.

12. Appareil selon l'une des revendications 1à 11 **caractérisé en ce qu'**il est constitué par un autocuiseur.

## Patentansprüche

1. Druckkochgerät mit einem Topf (1), der bestimmungsgemäß verschließbar ist mit einem Deckel (10) mittels eines Bajonettverschlusssystems mit Rampen (4) am Topf mit einer Dicke "ep" und einer Breite "L" und Rampen (13) am Deckel, **dadurch gekennzeichnet, dass** sich die Rampen (4) am Topf radial und schräg nach außen und nach unten zum Gerät erstrecken, wobei das Verhältnis "L/ep" zwischen 2,5 und 13 ist.

2. Gerät gemäß Anspruch 1, **dadurch gekennzeichnet, dass** das Verhältnis "L/ep" zwischen 8 und 13 ist für Rampen (4) am Topf aus nichtrostendem Stahl.

3. Gerät gemäß Anspruch 1 oder 2, **dadurch gekennzeichnet, dass** die Rampen (13) am Deckel sich radial und schräg nach innen zum Gerät und konjugiert zu den Rampen (4) am Topf erstrecken.

4. Gerät gemäß Anspruch 3, **dadurch gekennzeichnet, dass** sich die Rampen (18) am Deckel schräg erstrecken gemäß einer Winkelgröße (B), die größer ist als die Winkelgröße (A) der Schräge der Rampen (4) am Topf.

5. Gerät gemäß Anspruch 4, **dadurch gekennzeichnet, dass** die Winkelgröße (B) der Schräge der Rampen (13) am Deckel zwischen 15° und 25°, vorzugsweise zwischen 15° und 20°, ist, wobei die Winkelgröße (A) der Schräge der Rampen (4) am Topf zwischen 10° und 20° und vorzugsweise zwischen 10° und 15° ist.

6. Gerät gemäß Anspruch 4 oder Anspruch 5, **dadurch gekennzeichnet, dass** die Anlagelinie (14) der Rampen (13) am Deckel auf den Rampen (4) am Topf im wesentlichen in einem Bereich angeordnet ist, der dem zentralen Drittel der Breite jeder Rampe (4) am Topf entspricht, vorzugsweise in Richtung seiner Hälfte.

7. Gerät gemäß einem der Ansprüche 1 bis 6, **dadurch gekennzeichnet, dass** die Dicke der Rampen (4) am Topf im wesentlichen gleich ist der Dicke der Topfwand (3).

8. Gerät gemäß einem der Ansprüche 1 bis 7, **dadurch gekennzeichnet, dass** die Abschnitte der Rampen (4) am Topf und am Deckel (13) im wesentlichen eben sind.

9. Gerät gemäß einem der Ansprüche 1 bis 7, **dadurch gekennzeichnet, dass** die Abschnitte der Rampen (4) am Topf und am Deckel (13) im wesentlichen konisch oder parabolisch sind.

10. Gerät gemäß einem der Ansprüche 1 bis 9, **dadurch gekennzeichnet, dass** eine paarweise Einheit von vier Rampen (4) am Topf und vier Rampen (13) am Deckel vorgesehen sind.

11. Gerät gemäß einem der Ansprüche 1 bis 10, **dadurch gekennzeichnet, dass** der Umriss der seitlichen Wände (9) der Rampen (4) am Topf eine progressive Verbindung mit der Wand des Topfs bilden, die ausgehend von den oberen Verbindungsstrahlen ausgeführt ist.

12. Gerät gemäß einem der Ansprüche 1 bis 11, **dadurch gekennzeichnet, dass** es als Druckkochtopf ausgebildet ist.

## Claims

1. Pressure cooking appliance comprising a vessel (1) intended to be closed by a lid (10) by means of a bayonet closure system with vessel ramps (4) with a thickness "ep" and width "L" and lid ramps (13), **characterised in that** the said vessel ramps (4) extend radially and obliquely, towards the outside and towards the bottom of the appliance, the ratio "L/ep" being between 2.5 and 13.

2. Appliance according to Claim 1, **characterised in that** the ratio "L/ep" is between 8 and 13 for vessel ramps (4) made from stainless steel.

3. Appliance according to Claim 1 or 2, **characterised in that** the lid ramps (13) extend radially and obliquely towards the inside of the apparatus jointly with the vessel ramps (4).

4. Appliance according to Claim 3, **characterised in that** the lid ramps (18) extend obliquely at an angular value (B) greater than the angular value (A) of the obliquity of the vessel ramps (4).

5. Appliance according to Claim 4, **characterised in that** the angular value (B) of the obliquity of the lid ramps (13) is between 15° and 25°, and preferably between 15° and 20°, the angular value (A) of the obliquity of the vessel ramps (4) being between 10° and 20°, and preferably between 10° and 15°.

6. Appliance according to Claim 4 or Claim 5, **characterised in that** the line of application (14) of the lid ramps (13) to the vessel ramps (4) is situated substantially in an area corresponding to the central third of the width of each vessel ramp (4), preferably around half thereof.

7. Appliance according to one of Claims 1 to 6, **characterised in that** the thickness of the vessel ramps (4) is substantially equal to the thickness of the vessel wall (3).

8. Appliance according to one of Claims 1 to 7, **characterised in that** the sections of the vessel (4) and lid (13) ramps are substantially flat.

9. Appliance according to one of Claims 1 to 7, **characterised in that** the sections of the vessel (4) and lid (13) ramps are substantially conical or parabolic.

10. Appliance according to one of Claims 1 to 9, **characterised in that** it comprises a matched assembly of four vessel ramps (4) and four lid ramps (13).

11. Appliance according to one of Claims 1 to 10, **characterised in that** the contour of the lateral edges (9) of the vessel ramps (4) forms a progressive connection with the vessel edge, achieved using high connection radii.

12. Appliance according to one of Claims 1 to 11, **characterised in that** it consists of a pressure cooker.
